# EUROPÄISCHE PATENTSCHRIFT

(11) **EP 2 799 157 B1**
(45) Veröffentlichungstag und Bekanntmachung des Hinweises auf die Patenterteilung: **06.11.2019**
(21) Anmeldenummer: 14001079.4
(22) Anmeldetag: 24.03.2014
(51) Int. Cl.: B08B 9/093, B08B 9/20, B08B 9/08, B60R 15/04

(54) **Entleer- und Reinigungsstation mit Aufnahmekassette**
Draining and cleaning station with receiving cartridge
Station de vidange et de nettoyage avec cassette de réception

(30) Priorität: 30.04.2013 DE 102013007408
(43) Veröffentlichungstag der Anmeldung: 05.11.2014
(73) Patentinhaber: Tebartz, Ralf, 46514 Schermbeck (DE); Butterweck, Mark, 46514 Schermbeck (DE)
(72) Erfinder: Tebartz, Ralf, 46514 Schermbeck (DE); Butterweck, Mark, 46514 Schermbeck (DE)
(74) Vertreter: Demski, Siegfried

(56) Entgegenhaltungen:
- DE-A1-102010 005 130

## Beschreibung

Die Erfindung betrifft eine Entleer- und Reinigungsstation für einen einschiebbaren Toilettenbehälter mit einer Aufnahmekassette und einer Aufnahmeöffnung, wobei die Entleer- und Reinigungsstation zumindest ein Reinigungselement aufweist, welches über eine Reinigungsöffnung des Toilettenbehälters einführbar und automatisch absenk- und anhebbar ist, sowie ein Verfahren zur Reinigung eines Toilettenbehälters.

Die Reinigung von Toilettenbehältem, wie sie insbesondere bei Campingfahrzeugen vorzufinden sind, erfolgt durch die Entnahme eines Toilettenbehälters als Modul einer Toilettenanlage. An einer Entleerungsstation, hierbei kann es sich um eine normale Toilettenanlage handeln, wird der Inhalt des Toilettenbehälters über einen Auslassstutzen oder eine Reinigungsöffnung entsorgt. Dafür muss der Toilettenbehälter in eine bestimmte Position gebracht werden, um eine leichtgängige Entleerung des Inhalts des Toilettenbehälters gewährleisten zu können. Problematisch ist jedoch, dass die Entsorgung des Toilettenbehälterinhalts über den Auslassstutzen so zu erfolgen hat, dass der Inhalt punkt- und zielgenau an der Entsorgungsstelle aufgefangen werden kann. Dies ist jedoch in der Regel nicht ohne Weiteres möglich, da ein kontinuierlicher Abfluss des Toilettenbehälterinhalts über einen Auslassstutzen nach der Art des Inhaltes schon nicht möglich ist und somit eine sukzessive Verschmutzung des Entsorgungsbereichs eintritt. Dabei ist unter Verschmutzung sowohl die Belastung der Entsorgungsteile mit Inhaltsstoffen des Toilettenhändlers als auch eine Geruchsbelästigung in der näheren Umgebung der Entsorgungsstelle zu verstehen.

Die Entleerung der Toilettenbehälter erfolgt bisher manuell. Hierzu werden die Toilettenbehälter der Toilettenanlage von Wohnmobilen, Caravans oder Autoanlagen von Hand entnommen. Die Toilettenbehälter befinden sich hierbei in einem Schubkasten, der auf die jeweiligen Toilettenbehältergröße abgestimmt ist und sich wiederum direkt unter der Toilettenschüssel bei einem Wohnmobil befindet. Die Toilettenbehälter selbst sind mit einem Handgriff, einem Entlüftungsventil und einem Einfüllstützen ausgestattet, mit dem die Fäkalien via Toilettenschüssel in die Toilettenbehälter gelangen. Ferner können die Toilettenbehälter über einen schwenkbaren Entleerungsstutzen und abhängig vom Modell über Laufrollen zu einem leichteren Transport verfügen. Der Einfüllstutzen und Entleerungsstutzen können aber zusammenfallen und eine Reinigungsöffnung bilden. Die Toilettenbehälter weisen hierbei eine innenliegende erste Klappe zum Öffnen der Reinigungsöffnung auf, welche beispielsweise mithilfe eines Drehknopfes geöffnet werden kann. Darüber hinaus verfügen einige Toilettenbehälter über ein zweites äußeres Verschlusselement mit einem Schiebemechanismus, welcher eine seitliche Verschiebung des Verschlusselementes ermöglicht. Zur Entleerung der Toilettenbehälter werden von Campinganlagen teilweise auch von Tankstellen Entleerungsplätze zur Verfügung gestellt. Zu diesen Entleerungsplätzen müssen die Toilettenbehälter von Hand hin transportiert und entleert werden. Die Entleerung erfolgt über die Reinigungsöffnung, wobei hierzu ein Schraubdeckelverschluss, soweit vorhanden, zuvor entfernt werden muss, oder die innenliegende Klappe durch den Drehknopf geöffnet wird. Der Toilettenbehälter muss dann von Hand über die Entleerungsstelle gehalten und gleichzeitig das Entlüftungsventil gedrückt werden, sodass der Inhalt (die Fäkalien) entweichen können. Bei diesem Vorgang kommt es immer wieder zu Verschmutzungen der Toilettenbehälter und des Entleerungsstutzen, ebenso muss der Toilettenbehälter von innen mit Spülflüssigkeit gespült werden, weil sonst Reste in dem Toilettenbehälter bleiben. Diese Art der Entleerung von Toilettenbehältern ist äußert unhygienisch und sehr nachteilig.

Da die Entsorgungsstellen für Toilettenbehälter für Campingfahrzeuge, insbesondere auf Campingplätzen, in der Nähe von Sanitäreinrichtungen aufgestellt sind, werden an die Entleerung beziehungsweise die Entsorgung des Inhalts von mobilen Toilettenbehältern besondere Anforderungen gestellt. Darunter zählen unter anderem gesundheitliche Aspekte, die durch eine Verschmutzung des Sanitärbereichs einer benachbarten Entsorgungsstation hervorgerufen werden können. So treten an Entsorgungsstation gelegentlich stärkere Verschmutzungen auf, weil die Ausschüttung des Toilettenbehälterinhalts in einer Entsorgungsstelle oft nicht vollständig möglich ist. Daher ist die Abschirmung des Entsorgungsbereiches gegenüber der Umwelt geboten, damit eine Verschmutzung beziehungsweise eine Übertragung von Krankheiten durch den Toilettenbehälterinhalt ausgeschlossen werden kann. Darüber hinaus kann nicht sichergestellt werden, dass einzelne Benutzer der Entsorgungsanlagen, wobei es sich um normale Toilettenanlage handeln kann, nicht immer sorgfältig arbeiten und die Entsorgungsanlagen in einem nicht akzeptablen Zustand zurücklassen.

Aus dem deutschen Patent 921 689 ist eine Vorrichtung und ein Verfahren zum Reinigen von Behältern, insbesondere Metallfässern bekannt. Hierzu wird eine Reinigungsstation verwendet, in der ein Metallfass eingelegt werden kann und über eine Öffnung des Metallfasses eine starre Sauglanze mit Sprühdüsenöffnungen eingeführt wird. Das Metallfass selbst wird unter einem Winkel von ca. 45° fixiert und kann um die Diagonalachse über 360° gedreht werden. Aus diesem Grunde wird bei dieser Vorrichtung auch eine starre Sauglanze verwendet.

Aus dem US Patent 2,240,364 ist eine ähnliche Ausführungsform bekannt, welche ebenfalls mit einer starren Sauglanze arbeitet, wobei wiederum die zu reinigenden Behälter unter einem Winkel von annähernd 45° angeordnet und um die Diagonalachse rotierbar gelagert sind.

Die DE 10 2010 005 130 A1 offenbart ein Reinigungsgerät und ein Verfahren zur Reinigung von Toiletten für Campingfahrzeuge mit einer Ausgestaltung des Reinigungselementes. Die Zuführung des Reinigungselementes für unterschiedliche Toilettenbehälter wurde noch nicht zufriedenstellend gelöst.

Ferner ist als nachteilig anzusehen, dass eine Reihe von unterschiedlich großen Toilettenbehältern existieren, die nicht mit einer einzigen Reinigungsstation entleert werden können.

Die Aufgabe der Erfindung besteht daher, eine Adaptionsmöglichkeit aufzuzeigen, um die unterschiedlich großen Toilettenbehälter der Campingfahrzeuge in einer Entleer- und Reinigungsstation aufnehmen zu können, um eine vollautomatische Reinigung durchzuführen.

Erfindungsgemäß ist zur Lösung der Aufgabe vorgestehen, dass die Aufnahmekassette zur Aufnahme unterschiedlicher Toilettenbehältergrößen vorgesehen ist, wobei das Reinigungselement mithilfe von Positioniermittel und einer Zentriereinrichtung oberhalb der Reinigungsöffnung positionierbar ist, wobei die Zentriereinrichtung über eine keilförmige Andruckfläche eine Anpassung an die Höhe des Toilettenbehälters vornimmt und über eine Führung eine seitliche Positionierung des Reinigungselementes gegenüber der Reinigungsöffnung erfolgt, um den Verschluss des Toilettenbehälters gleichzeitig über einen Schieber in eine geöffnete Position zu verschieben. Weitere vorteilhafte Ausgestaltungen der Erfindung ergeben sich aus den Unteransprüchen.

Zur Reinigung der unterschiedlich großen Toilettenbehälter in der Entleer- und Reinigungsstation ist erfindungsgemäß eine Aufnahmekassette integriert, die zur Aufnahme von unterschiedlich großen Toilettenbehältern verwendet werden kann und die Möglichkeit bietet, den Toilettenbehälter mit seiner Reinigungsöffnung annähernd unter dem Reinigungselement zu positionieren. Durch die Positionierung wird die Möglichkeit geschaffen, eine vollautomatische Reinigung des Toilettenbehälters vorzunehmen, wobei der Toilettenbehälter in die Aufnahmekassette der Entleer- und Reinigungsstation insoweit eingeschoben wird, dass die Reinigungsöffnung unter dem Reinigungselement zu liegen kommt. Durch die Positionierungsmittel wird hierbei die Handhabung wesentlich vereinfacht und auch Nicht-Fachleute können eine solche Reinigung durchführen, insbesondere dann, wenn die Reinigung von den Campingbesuchern selbst eingeleitet werden soll. Unabhängig der verwendeten Toilettenbehältergrößen kann somit jeder Besitzer eines Campingwagens den Toilettenbehälter zu der Entleer- und Reinigungsstation transportieren und in die Aufnahmekassette der Entleer- und Reinigungsstation einführen. Gegen Zahlung eines geringen Entgeltes kann anschließend der vollautomatische Reinigungsprozess ablaufen, sodass nach Beendigung des Reinigungsvorganges der Toilettenbehälter aus der Aufnahmekassette der Entleer- und Reinigungsstation entnommen werden kann, um ihn wieder im Campingwagen zu platzieren.

Um eine Zuführung und Positionierung des Toilettenbehälters in der Aufnahmekassette zu ermöglichen, weist diese zumindest eine Aufnahmeöffnung auf, die sich vorzugsweise an einer Stirnfläche befindet, oder sich von der Stirnfläche ausgehend bis in den oberen Bereich teilweise hinein erstrecken kann. Vorzugsweise wird hierbei eine Aufnahmekassette verwendet, die neben einem Boden zwei Seitenwände und im rückwärtigen Bereich eine Rückwand sowie eine Abdeckung im hinteren Bereich aufweist, sodass der vordere Bereich vollständig und der obere Bereich teilweise geöffnet sind, um den Toilettenbehälter ohne Schwierigkeiten in die Aufnahmekassette einzuschieben und das Reinigungselement über der Reinigungsöffnung des Toilettenbehälters auszurichten. Zur Absaugung des Toilettenbehälterinhaltes wird hierzu zuvor über einen Drehknopf eine innenliegende erste Klappe geöffnet, damit ein Reinigungselement in die Reinigungsöffnung abgesenkt werden kann. Ein zweites auf der Außenseite vorhandenes Verschlusselement kann durch die Zentriereinrichtung seitlich verschoben werden, um die Reinigungsöffnung vollständig zu öffnen. Dieses Verschlusselement wird beim Einschieben des Toilettenbehälters automatisch in eine geöffnete Position verschoben, um die automatische Reinigungsprozedurstarten zu können. Damit das zweite Verschlusselement geöffnet werden kann und die Reinigungsöffnung des Toilettenbehälters unter einem Reinigungselement zu liegen kommt, verfügt die Entleer- und Reinigungsstation über eine Zentriereinrichtung, welche über eine keilförmige Andruckfläche eine Anpassung an die Höhe des Toilettenbehälters und über eine Führung eine seitliche Positionierung des Reinigungselementes gegenüber der Reinigungsöffnung ermöglicht. Die keilförmige Andruckfläche dient hierbei vorrangig dazu, eine Anpassung an die Höhe des Toilettenbehälters vorzunehmen, während die Zentriereinrichtung über die Führung zusätzlich seitlich verstellbar ist, um das Reinigungselement gegenüber der Reinigungsöffnung auszurichten. Nach erfolgter Zuführung der Aufnahmekassette mit Toilettenbehälter in die Entleer- und Reinigungsstation kann durch Betätigen eines Startknopfes der Reinigungsvorgang gestartet werden, wobei in einem ersten Schritt das Reinigungselement in die Reinigungsöffnung des Toilettenbehälters automatisch abgesenkt wird. Diese Absenkung kann aber nur dann erfolgen, wenn die Reinigungsöffnung unterhalb des Reinigungselementes angeordnet ist. Hierzu sind die Positionierungsmittel und die Zentriereinrichtung vorgesehen. Mithilfe der Zentriereinrichtung kann die Reinigungsöffnung des Toilettenbehälters unmittelbar unter dem Reinigungselement angeordnet werden, wobei die Aufnahmekassette mit Arretierungsmitteln ausgestattet ist, um unterschiedliche Längen und Höhen der Toilettenbehälter innerhalb der Aufnahmekassette zu berücksichtigen. In spezieller Ausgestaltung kann ein schwenkbeweglicher Haken an einer oberen hinteren Abdeckung befestigt sein, welcher beim Einschieben des Toilettenbehälters aus einer vertikalen Position in eine horizontale Position gedrückt wird, wobei gleichzeitig das Hakenende in eine Griffmulde des Toilettenbehälters einrastet und die Tiefenposition festlegt. Anschließend wird der Reinigungsvorgang gestartet und die Reinigung des Toilettenbehälters vollzogen. Nach Beendigung des Reinigungsvorgangs wird das Reinigungselement aus dem Innenbereich des Toilettenbehälters herausgezogen, sodass der Toilettenbehälter aus der Aufnahmekassette der Entleer- und Reinigungsstation wieder entnommen werden kann.

Die Zuführung eines Toilettenbehälters in die Aufnahmekassette weist insbesondere den Vorteil auf, dass ein direkter Kontakt der Umgebung mit dem Inhalt des Toilettenbehälters während des Reinigungsvorganges ausgeschlossen werden kann, sodass eine Verschmutzung der Umgebung und eine Übertragung von Krankheiten ebenfalls weitestgehend ausgeschlossen werden kann. Weitergehend trägt auch der automatische Reinigungsvorgang und mit der automatischen Absenkbarkeit und Anhebbarkeit des Reinigungselementes dazu bei, den Grad der Verschmutzung und die Gefahr der Übertragung von Krankheitskeimen in der Umgebung der Versorgungsstelle zu minimieren. Darüber hinaus kann mithilfe des Reinigungselementes auch die Aufnahmekassette selbst gereinigt werden, wenn der Toilettenbehälter entnommen wurde, sodass eine Verschmutzung der Toilettenbehälteraußenseite ebenfalls ausgeschlossen werden kann. Damit ist gewährleistet, dass eine optimale Reinigung von nachfolgend eingesetzten Toilettenbehältern erfolgt, ohne dass eine Verschmutzung auf der Außenseite erfolgen kann.

Vorzugsweise ist die Aufnahmekassette hierbei mit einer Aufnahmeöffnung ausgestattet, welche zur Aufnahme des Toilettenbehälters vorgesehen ist, um den Toilettenbehälter in die Entleer- und Reinigungsstation einzuführen. Damit wird eine leichte Zugangsmöglichkeit zur Entleer- und Reinigungsstation erzielt, wobei die Einlagerung des Toilettenbehälters und Herausnahme aus der Aufnahmekassette mit wenigen Handgriffen erledigt werden kann.

Um eine exakte Positionierung des Toilettenbehälters mit seiner Reinigungsöffnung unterhalb des Reinigungsmittels zu ermöglichen, ist in weiterer vorteilhafter Ausgestaltung der Erfindung vorgesehen, dass die Positionierungsmittel aus optischen, mechanischen und/oder elektromechanischen Elementen bestehen. Die optischen Elemente können beispielsweise aus Lichtschranken, Reflexionslichtschranken oder Näherungsschaltern bestehen, welche die äußere Gehäuseoberfläche des Toilettenbehälters abtasten und somit deren Größe ermitteln können. Mechanische Elemente können hierbei beispielsweise aus Führungsschienen und/oder Anschlägen bestehen, gegen die der Toilettenbehälter zur Anlage kommt, während als elektromechanische Elemente beispielsweise Kontaktschalter eingesetzt werden können, die bei einer entsprechenden Größe und Länge des Toilettenbehälters auslösen und damit auch eine Bestimmung der Größe des Toilettenbehälters ermöglichen. Mithilfe der optischen, mechanischen und/oder elektromechanischen Elemente besteht somit die Möglichkeit, die Höhe und/oder Breite der Toilettenbehälter abzutasten und mithilfe insbesondere von mechanischen Elementen die Tiefenposition der Toilettenbehälter innerhalb der Aufnahmekassette durch Anschläge zu bestimmen, sodass in jedem Fall sichergestellt ist, dass sich die Reinigungsöffnung des Toilettenbehälters unterhalb des Reinigungselementes befindet.

Das Reinigungselement selbst zeichnet sich durch einen eigenen Antrieb aus, welcher eine horizontale und/oder vertikale Bewegung ausführen kann, wobei insbesondere das Reinigungselement elastisch biegsam und/oder verformbar ausgestaltet sein kann, um somit sämtliche Ecken des Toilettenbehälters zu erreichen. Mithilfe des Reinigungselementes wird der Inhalt des Toilettenbehälters, das heißt die Fäkalien, zunächst vollständig abgesaugt und anschließend eine Reinigungsflüssigkeit in den Toilettenbehälter eingesprüht, die ebenfalls abgesaugt wird, sodass eine Spülung des gesamten Toilettenbehälters erfolgt. Die Spülung der Toilettenbehälter erfolgt in der Regel mit Frischwasser während des Absaugvorganges. Nach erfolgter Reinigung des Toilettenbehälters kann die Zugabe einer definierten Menge an Klärflüssigkeit erfolgen, welche zur Zersetzung der Fäkalien und der Geruchsminderung vorgesehen ist. Die Aufnahmekassette und die Entleer- und Reinigungsstation bilden hierbei die Basis zur Reinigung der Toilettenbehälter unterschiedlichster Bauart. Derzeit sind am Markt verschiedene gängige Modelle für Toilettenbehälter bekannt, die zum Teil mit Schubkästen ausgestattet sind oder einzeln verwendet werden. Die einzelnen Schubkästen sind hierbei untereinander austauschbar, sodass auch Auslaufmodelle und ebenso neue Modelle berücksichtigt werden können, um sich somit auf die aktuelle Marktänderung einstellen zu können, wobei die Toilettenbehälter entweder aus den Schubkästen herausgenommen und in die Aufnahmekassette eingesetzt werden, oder alternativ die Toilettenbehälter mitsamt dem Schubkasten in die Aufnahmekassette eingesetzt werden können.

Das verwendete Reinigungselement kann hierbei als Saug- und Spülrohr ausgestaltet sein, welches eine rotierende Bewegung ausführt. Die rotierende Bewegung wird hierbei durch einen vorhandenen Antrieb ausgelöst und ist innerhalb des Toilettenbehälters deswegen erforderlich, damit innerhalb des Toilettenbehälters eine gleichmäßige Reinigung der Oberfläche, einschließlich aller Eckbereiche, erfolgen kann, ohne dass Bereiche des Toilettenbehälters von der Reinigung ausgespart werden. Auch wird durch eine solche Rotation gewährleistet, dass am Reinigungselement anhaftende Verunreinigungen gelöst werden.

Alternativ besteht die Möglichkeit, dass eine Pendelmechanik die Bewegung des Saug- und Spülrohres erleichtert. Durch die Pendelmechanik wird die Kassette in der Kassettenaufnahme in Bewegung gebracht und dadurch alle Schmutzpartikel an das Saug- und Spühlrohr geführt. Somit wird durch die Rotationsbewegung des Saug- und Spülrohrs die Anhaftung von Verschmutzungen an dem Reinigungselement verhindert bzw. erschwert, wodurch eine kontinuierliche und gleichmäßige Reinigung der Innenseite des Toilettenbehälters gewährleistet ist. Hierzu kann insbesondere vorgesehen sein, dass zur besseren Bewegbarkeit des Reinigungselementes das Saug- und Spülrohr elastisch, biegsam und/oder verformbar ausgestaltet ist. In Abhängigkeit der Größe der Toilettenbehälter erfolgt somit eine optimale Reinigung des Innenraumes, wobei durch die besondere Ausgestaltung des Saug- und Spülrohrs die Bewegung innerhalb des Toilettenbehälters leichtgängig durchführbar ist und eine Beschädigung des Behälters ausgeschlossen werden kann.

Vorzugsweise wird das Reinigungselement als Saug- und Spülrohr derart gestaltet, dass ein doppelwandiges Rohr vorliegt, sodass ein Saug- und Spülvorgang gleichzeitig erfolgen kann. Dies hat den Vorteil, dass während der Reinigung der Innenseite eines Toilettenbehälters durch eine Spülung eine sofortige Absaugung erfolgt und die Schmutzpartikel restlos entfernt werden können. An dem Saug- und Spülrohr befinden sich außerhalb der Aufnahmeeinrichtung zwei flexible Schläuche, wobei einer zur Zufuhr von Reinigungsmitteln und Spülflüssigkeit zur Spülung des Toilettenbehälters und einer zur Absaugung des Toilettenbehälterinhaltes vorgesehen ist. Durch Schraubverbindungen können die flexiblen Schläuche einerseits mit dem Reinigungsgerät und andererseits mit Versorgungs- und Entsorgungsleitungen verbunden werden. Die an das Reinigungselement anschließbaren Schläuche mit Schraubverbindungen ermöglichen hierbei eine individuelle Verbindung mit örtlich vorhandenen Versorgungs- und Entsorgungseinrichtungen, wobei gegebenenfalls durch Adapter eine Anpassung an vorhandene Rohrsysteme erfolgen kann. Beispielsweise, wenn derartige Reinigungsgeräte in Ländern mit abweichenden Versorgungs- und Entsorgungsanschlüssen aufgestellt werden sollen.

Weiterhin ist vorgesehen, dass das Innenrohr des Reinigungselementes eine Öffnung zur Absaugung des Toilettenbehälterinhalts aufweist. Das Innenrohr hat einen ausreichenden Querschnitt, über den die Bestandteile des Toilettenbehälterinhalts in das Innenrohr angesaugt werden. Es ist dabei möglich, das eine Spülung der Toilettenbehälter gleichzeitig oder zeitversetzt zum Absaugvorgang erfolgen kann, sodass zuerst eine Absaugung des Inhalts des Toilettenbehälters mit einer anschließenden Spülung erfolgt oder eine zeitlich vorgelagerte Spülung mit anschließender Absaugung als auch eine gleichzeitige Spülung und Absaugung erfolgen könnte.

Die Absaugung der Flüssigkeiten aus dem Toilettenbehälter erfolgt dabei unter Verwendung einer Saugpumpe. Dies hat gegenüber Druckpumpen den Vorteil, dass durch einen vorherigen Flüssigkeitseintrag kein Überdruck im Toilettenbehälter erzeugt werden muss, um einen Austritt der im Toilettenbehälter befindlichen Bestandteile zu bewirken, wodurch aufgrund eventuell kleinerer Undichtigkeiten des Toilettenbehälters beziehungsweise des Einfüllstutzens eine Verschmutzung der Umgebung der Entsorgungsstation verhindert wird. Die Saugpumpe ist dabei erfindungsgemäß als elektrische Pumpe ausgestattet, die ihre Abluft über einen Aktivkohlefilter geruchsneutral an die Umgebung abgibt.

Weiterhin ist vorgesehen, dass die Absenkung, die Hebung und/oder die Rotation des Reinigungselementes über einen Elektromotor, einen Hydraulikantrieb und/oder über Wasserdruck erfolgt. Zusätzlich kann die Aufnahmekassette schwenkbeweglich in der Entleer- und Reinigungsstation gelagert sein, wobei die Schwenkbewegung durch einen Elektromotor, einen Hydraulikantrieb oder über einen unterschiedlichen Wasserdruck erfolgt. Somit kann der Reinigungsvorgang automatisch und/oder manuell steuerbar ausgeführt werden, wobei eine Anpassung an unterschiedliche Behältergrößen erfolgen kann, um eine Verschmutzung der Entsorgungsstationen durch den Toilettenbehälterinhalt zu verhindern. Um diese Bedingung zu erfüllen ist es geboten, eine automatische Reinigung der Toilettenbehälter zu gewährleisten. Es ist jedoch auch denkbar, dass die Absenkung, Hebung und die Rotation des Reinigungselementes automatisch und/oder manuell erfolgt, damit eine Reinigung nicht von der Automatik des Antriebs alleine abhängig ist. Insbesondere kann eine individuelle Tiefeneinstellung des Reinigungselementes gegenüber der Reinigungsöffnung der Toilettenbehälter vorgenommen werden.

Die Entleer- und Reinigungsstation ist mit einer Fäkaliengrube oder mit einem Tank über ein Rohrleitungs- oder Schlauchsystem verbunden, sodass der Nutzer einer solchen Anlage ansonsten keine Arbeiten verrichten muss. Aufgrund des automatischen und hygienischen Reinigungsvorganges ohne besondere körperliche Anstrengung erfolgt somit eine effektive Reinigung der Toilettenbehälter für mobile Toilettenanlagen.

Des Weiteren liegt der Erfindung die Aufgabe zugrunde, ein optimiertes Verfahren zur Reinigung von Toilettenbehältern für Campingfahrzeuge aufzuzeigen, welches insbesondere an die Verwendung unterschiedlicher Toilettenbehältergrößen angepasst ist.

Erfindungsgemäß ist ein Verfahren zur Reinigung von Toilettenbehältern vorgesehen, wobei die automatische Einführung eines elastisch biegsam und/oder verformbaren Saug- und Spülrohrs als Reinigungselement in den Toilettenbehälter erfolgt und durch einen Antrieb eine horizontale und/oder vertikale Bewegung des Saug- und Spülrohres ausgeführt wird und eine Spülung und Absaugung des Inhalts des Toilettenbehälters erfolgt, welche sich durch eine automatische Erkennung der Größe des Toilettenbehälters, wobei das Reinigungselement durch Positioniermittel und eine Zentriereinrichtung oberhalb der Reinigungsöffnung positioniert wird, wobei die Zentriereinrichtung über eine keilförmige Andruckfläche eine Anpassung an die Höhe des Toilettenbehälters vornimmt und über eine Führung eine seitliche Positionierung des Reinigungselementes gegenüber der Reinigungsöffnung erfolgt, um den Verschluss des Toilettenbehälters gleichzeitig über einen Schieber in eine geöffnete Position zu verschieben.

Die Verfahrensschritte sind in ihrer Abfolge darauf ausgerichtet, eine verschmutzungsfreie Reinigung des Toilettenbehälters für Campingfahrzeuge zu ermöglichen, wobei eine exakte Positionierung der Reinigungsöffnung unter dem Reinigungselement für unterschiedlich große Toilettenbehälter durch eine Zentriereinrichtung vorgesehen ist. Diese automatische Positionierung führt zu dem wesentlichen Vorteil, dass nach der Zuführung des Toilettenbehälters über eine Bewegungseinrichtung ein Saug- und Spülrohr in die Reinigungsöffnung abgesenkt werden kann. Nachdem die Absenkung in den Toilettenbehälter erfolgt ist, kann eine Spülung und Absaugung des Toilettenbehälters in Gang gesetzt werden. Durch eine horizontale und/oder vertikale Bewegung der Kassettenaufnahme werden dabei die Fäkalien an das Saug- und Spühlrohr zusätzlich herangeführt. Die Spülung und Absaugung kann dabei gleichzeitig oder in zwei aufeinanderfolgenden Schritten erfolgen, wobei der Spül- und Saugvorgang über eine externe, an die Entleer- und Reinigungsstation angeschlossene Pumpeneinheit, eingeleitet wird.

Der besondere Vorteil der vorliegenden Erfindung besteht darin, dass mithilfe einer Entleer- und Reinigungsstation unterschiedliche Größen von Toilettenbehältern entleert werden können. Durch ein automatisches Adaptionssystem mithilfe von Positionierungsmitteln wird hierbei erreicht, dass der Toilettenbehälter mit seiner Reinigungsöffnung unmittelbar unter dem Reinigungselement zu liegen kommt, sodass das Reinigungselement lediglich durch die Reinigungsöffnung in den Reinigungsbehälter abgesenkt zu werden braucht, bevor der Reinigungsvorgang startet. Durch die horizontale und/oder vertikale Bewegung des Adaptionssystems werden dabei die Fäkalien an das Saug- und Spühlrohr herangeführt.

Die Erfindung wird im Weiteren anhand der Figuren näher erläutert.

Es zeigt
- Fig. 1: in einer perspektiven Ansicht eine erfindungsgemäße Aufnahmekassette zur Aufnahme der Toilettenbehälter,
- Fig. 2: in einer rückwärtigen Ansicht die Aufnahmekassette gemäß Figur 1,
- Fig. 3: in einer schematischen Ansicht eine Entleer- und Reinigungsstation mit Aufnahmekassette und Reinigungselement und
- Fig. 4: in einer schematischen Ansicht einen Toilettenbehälter, die Entleer- und Reinigungsstation sowie in einer Einzeldarstellung den Zentrierungsmechanismus zum Öffnen der Reinigungsöffnung.

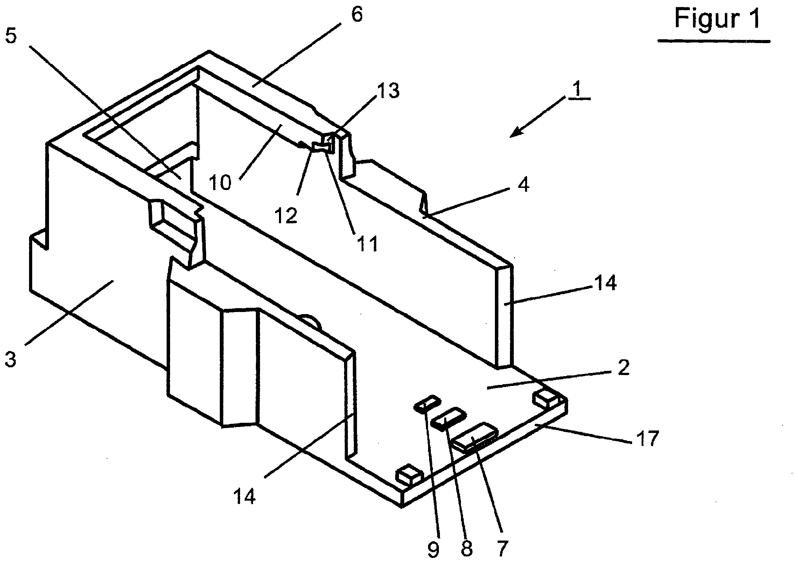

Figur 1 zeigt in einer perspektivischen Ansicht eine Aufnahmekassette 1, wie sie zur Reinigung von Toilettenbehältern verwendet werden kann. Die Aufnahmekassette 1 ist Bestandteil einer Entleer- und Reinigungsstation, wobei die Aufnahmekassette 1 in der Entleer- und Reinigungsstation integriert und horizontal beweglich gelagert ist. Die Toilettenbehälter sind hierbei mit einer ersten innen liegenden Klappe ausgestattet, welche zuvor mithilfe eines Drehknopfes manuell geöffnet werden muss. Eine zweite außen liegende Klappe ist demgegenüber verschieblich gelagert und wird durch eine Zentriereinrichtung innerhalb der Entleer- und Reinigungsstation insoweit erfasst, dass das Reinigungselement unmittelbar über der Reinigungsöffnung des Toilettenbehälters positioniert werden kann. In Abhängigkeit der Höhe des Toilettenbehälters wird hierbei die Höhe der Zentriereinrichtung über eine vordere keilförmige Andruckfläche nachgestellt und über eine Führung eine seitliche Verschiebung vorgenommen, sodass die Zentriereinrichtung unmittelbar an der zweiten äußeren Klappe zu liegen kommt und diese beim weiteren Einschieben des Toilettenbehälters zur Seite verschiebt, um die Reinigungsöffnung zu öffnen, damit das Reinigungselement eintauchen kann.

Die Aufnahmekassette 1 besteht aus einem Bodenelement 2 mit Seitenwänden 3,4 und einer Rückwand 5. Im oberen und vorderen Bereich ist die Aufnahmekassette 1 weitestgehend offen gestaltet, sodass ein Toilettenbehälter eingeschoben werden kann. Der hintere Bereich des Aufnahmekassette 1 wird durch eine Abdeckung verschlossen, die in dieser Ansicht nicht dargestellt ist. An der Abdeckung ist ein Haken verschwenkbar gelagert und ermöglicht mit einem Hakenende die Einschubtiefe des Toilettenbehälters zu begrenzen. Die Rückwand 5 erstreckt sich nur über einen Teil der Bauhöhe der Aufnahmekassette 1 und die Seitenwände 3, 4 sind gegenüber einer Vorderkante 17 zurückgesetzt. Die aufzunehmenden Toilettenbehälter können unterschiedliche Höhen, Breiten und Tiefen aufweisen. Um sicherzustellen, dass das Reinigungselement unmittelbar in die Reinigungsöffnung eines solchen Toilettenbehälters abgesenkt werden kann, ist eine Positionierung in einer bestimmten Weise erforderlich. Die Positionierung innerhalb der Aufnahmekassette 1 erfolgt hierbei im gezeigten Ausführungsbeispiel durch Bodenerhebungen 7, 8, 9, die eine unterschiedliche Position des Toilettenbehälters in der Tiefe ermöglichen. Gleichzeitig wird durch einen teilweise umlaufenden Rand 10, der sich oberhalb der Seitenwand 3,4 und der Rückwand 5 erstreckt, und der zurückgesetzten Seitenwände 3,4 eine mechanische Positionierhilfe zur Verfügung gestellt, um die Höhe und Breite des Toilettenbehälters zu erfassen. Der umlaufende Rand 10 und die Seitenwände 3,4 sind zur offenen Vorderseite der Aufnahmekassette 1 hin mit Anschlagflächen 11, 12, 13 ausgestattet, zusätzlich weisen die Seitenwände 3, 4 jeweils eine Anschlagfläche 14 auf. Je nach Höhe oder Breite des Toilettenbehälters kann dieser somit annähernd bis zur Rückwand eingeschoben werden, wenn beispielsweise die Höhe unterhalb des umlaufenden Randes 10 liegt. Soweit die Höhe des Toilettenbehälters unter der ersten Anschlagfläche 11 liegt, kann der Toilettenbehälter bis zur Anschlagfläche 12 eingeschoben werden. Gleiches gilt, wenn der Toilettenbehälter ein noch höheres Bauvolumen aufweist, sodass ein Einschub nur bis zur Anschlagfläche 11 möglich ist. Für Toilettenbehälter, die darüber hinaus eine besondere Höhe aufweisen, besteht lediglich die Möglichkeit, diese bis zur Anschlagfläche 13 in die Aufnahmekassette 1 einzuführen. Für Toilettenbehälter die darüber hinaus eine besondere Breite aufweisen, besteht die Möglichkeit, diese bis zur Anschlagfläche 14 in die Aufnahmekassette 1 einzuführen. Für Toilettenbehälter, die über eine Griffmulde verfügen, besteht die Möglichkeit, diese bis zur Anschlagfläche 18 in die Aufnahmekassette 1 einzuführen.

Nach erfolgter Positionierung des Reinigungselementes oberhalb der Reinigungsöffnung erfolgt eine Absenkung des Reinigungselementes, um den Reinigungsvorgang zu starten. Nach Beendigung des Reinigungsvorganges wird der Toilettenbehälter aus der Entleer- und Reinigungsstation, das heißt aus der Aufnahmekassette 1 wieder herausgezogen, wobei im Anschluss der Toilettenbehälter wieder in das Campingfahrzeug eingebaut werden kann, während die Aufnahmekassette 1 für weitere Reinigungsvorgänge mit anderen Toilettenbehältern zur Verfügung steht.

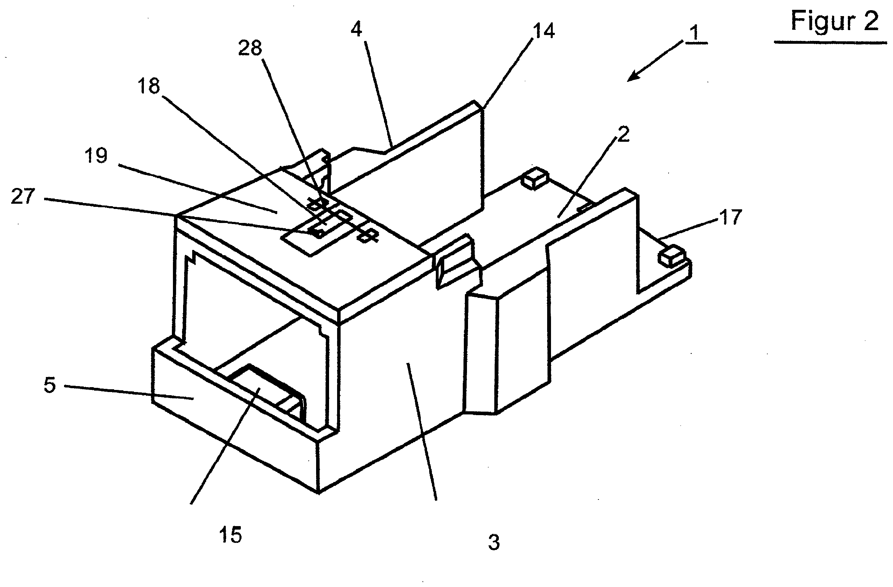

Figur 2 zeigt in einer rückwärtigen Ansicht die aus Figur 1 bekannte Aufnahmekassette 1. Die Aufnahmekassette 1 mit einem Bodenelement 2 und den beiden Seitenwänden 3, 4 weist im rückwärtigen Bereich eine Rückwand 5 auf, die sich nur über einen Teil der gesamten Bauhöhe der Aufnahmekassette 1 erstreckt. Im oberen Bereich ist ein umlaufender Rand 6 ausgebildet, der eine Zuführung von Toilettenbehältern unterschiedlicher Höhe bis zu einer vorgesehenen Tiefe ermöglicht. Aus dieser Ansicht ist weiterhin ein Anschlagelement 15 ersichtlich, sodass einige Toilettenbehälter nicht vollständig bis zur Rückwand 5 eingeschoben werden können, sondern nur bis zu dem Anschlagelement 15. Im hinteren Bereich der Aufnahmekassette 1 ist des Weiteren eine Abdeckung 19 befestigt, welche eine Aussparung 27 und einen Haken 18 aufweist. Der Haken 18 ist schwenkbar über ein Lagerelement 28 an der Abdeckung 19 befestigt. Beim Einschieben des Toilettenbehälters wird der Haken 18 aus einer vertikalen Position in eine horizontale Position angehoben, sodass der Toilettenbehälter maximal bis zum Hakenende eingeschoben werden kann. Auch diese Maßnahme dient zur Positionierung des Toilettenbehälters innerhalb der Aufnahmekassette 1.

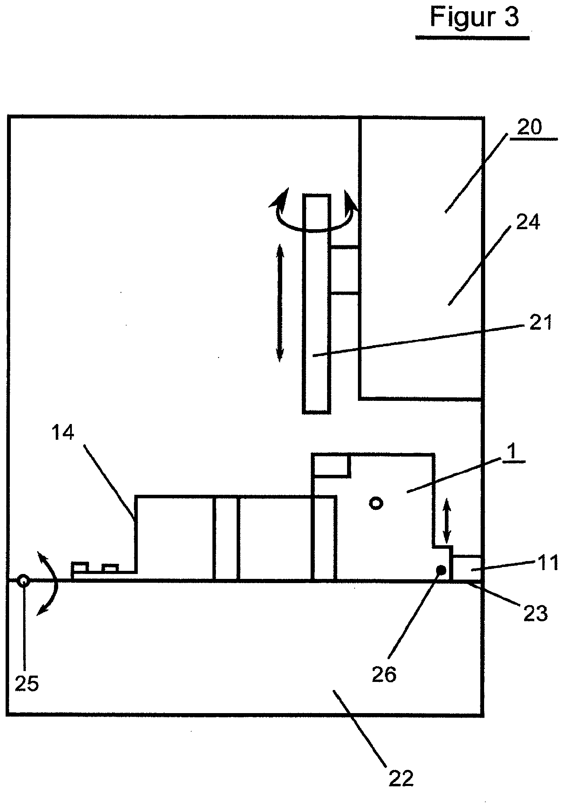

Figur 3 zeigt in einer schematischen Ansicht eine Entleer- und Reinigungsstation 20 mit der beschriebenen Aufnahmekassette 1 und einem Reinigungselement 21. Die Entleer- und Reinigungsstation 20 ist mit einem Gehäuse 22 ausgestattet, in dem im unteren Bereich eine Aufnahmeeinrichtung 23 in der Entleer- und Reinigungsstation 20 eingebaut ist, und an den Positionen 25, 26 mit einem Schwenkmechanismus versehen ist, um eine Schwenkbewegung des Aufnahmekassette 1 zu ermöglichen. Dadurch werden die Fäkalien während des Saug-Spühlvorgangs dem Saug- und Spühlrohr zugeführt. Hierdurch können alle Fäkalien restlos aus dem Toilettenbehälter abgesaugt werden. Ein Reinigungselement 21 ist an einer Hebeeinrichtung 24 angeschlossen, sodass das Reinigungselement 21 in eine vorhandene Reinigungsöffnung des Toilettenbehälters durch eine Abwärtsbewegung eingeführt werden kann. Zusätzlich besteht die Möglichkeit, dass das Reinigungselement 21 drehbar gelagert ist, sodass sämtliche Ecken und Winkel des Toilettenbehälters bei dem Reinigungs- und Spülvorgang gereinigt werden können. Weitere spezielle Ausgestaltungen, wie sie in den Ansprüchen und der Beschreibung genannt werden, gehen im Weiteren davon aus, dass das Reinigungselement aus einem elastisch biegsamen und/oder verformbaren Saug- und Spülrohr besteht. Alternativ besteht auch die Möglichkeit, dass ein doppelwandiges Rohr mit flexiblen Schlauchanschlüssen und Schraubverbindungen verwendet wird, um mithilfe des Saug- und Spülrohrs sämtliche Eckbereiche des Toilettenbehälters zu erreichen. Über das Reinigungselement 21 in Form der unterschiedlichsten Gestaltungen wird dann eine Absaugung des Toilettenbehälterinhaltes und gegebenenfalls die Zuführung einer Reinigungsflüssigkeit vorgenommen.

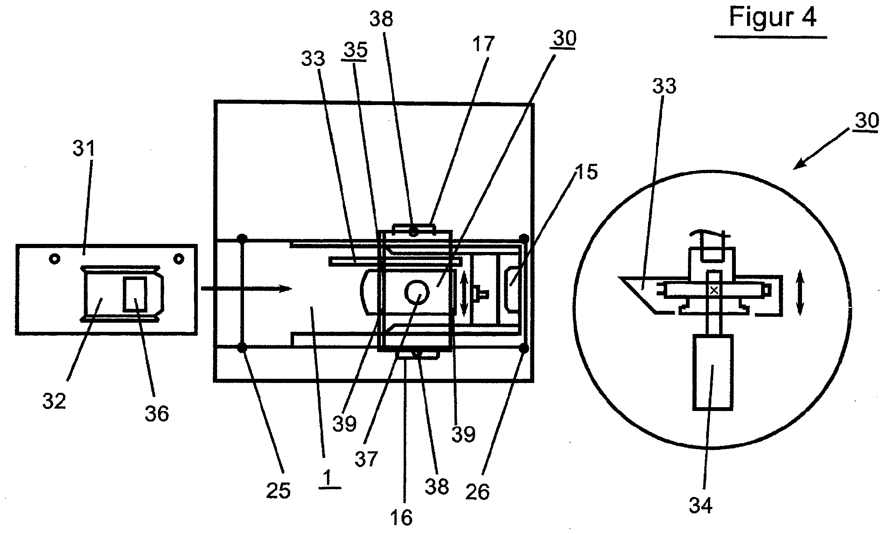

Figur 4 zeigt in drei Teilansichten schematisch eine Zentriereinrichtung 30, die auf der Aufnahmekassette 1 befestigt ist. Ein Toilettenbehälter 31 mit einer Schiebeklappe 32 kann durch die vordere Aufnahmeöffnung der Aufnahmekassette 1 eingeschoben werden, wobei die Zentriereinheit 30 mit einer keilförmigen Andruckfläche 33 zunächst einen Höhenausgleich entsprechend der Bauhöhe des Toilettenbehälters 31 gegenüber der Zentriereinrichtung 30 vornehmen kann. Zu diesem Zweck gleitet die Andruckfläche 33 über die Vorderkante des Toilettenbehälters 31 und hebt die Zentriereinrichtung 30 an. Des Weiteren besteht durch eine Führung die Möglichkeit, dass die Zentriereinrichtung 30 eine seitliche Bewegung ausführt, sodass sich die Zentriereinrichtung 30 nicht nur in der Höhe positionieren kann, sondern auch eine Seitenverschiebung ermöglicht, soweit aufgrund von Bauteiltoleranzen bei der Einführung des Toilettenbehälters 31 die Schiebeklappe 32 nicht mit der Zentriereinrichtung 30 fluchtet. Zu diesem Zweck besitzt die Zentriereinrichtung 30 die Möglichkeit, durch die keilförmigen Andruckfläche 33 eine Nivellierung in der Höhe vorzunehmen, wobei diese mithilfe eines Zugelementes 34 nach dem Entfernen des Toilettenbehälters 31 wieder in die ursprüngliche Ausgangsposition zurückgezogen wird. Über eine Führung 35 wird die Zentriereinrichtung 30 seitlich verschoben, sodass eine Ausrichtung der Zentriereinrichtung 30 auf die Reinigungsöffnung des eingeschobenen Toilettenbehälters erfolgen kann. Die Zentriereinrichtung 30 wird hierbei über zwei vertikale und horizontale Führungsstangen 38, 39 verschieblich gehalten. Nachdem die Positionierung des Toilettenbehälters 31 erfolgt ist, kann das aus der Figur 3 bekannte Reinigungselement 21 durch eine Bohrung 37 in den Toilettenbehälter 31 eintauchen, um den Reinigungsvorgang zu starten.

### Bezugszeichenliste

- 1: Aufnahmekassette
- 2: Bodenelement
- 3: Seitenwand
- 4: Seitenwand
- 5: Rückwand
- 6: Rand
- 7: Bodenerhebung
- 8: Bodenerhebung
- 9: Bodenerhebung
- 10: Rand
- 11: Anschlagfläche
- 12: Anschlagfläche
- 13: Anschlagfläche
- 14: Anschlagfläche
- 15: Anschlagelement
- 16: Verstärkung
- 17: Vorderkante
- 18: Anschlagfläche
- 19: Abdeckung
- 20: Entleer- und Reinigungsstation
- 21: Reinigungselement
- 22: Gehäuse
- 23: Auflagefläche
- 24: Hebeeinrichtung
- 25: Position
- 26: Position
- 27: Aussparung
- 28: Lagerelement
- 30: Zentriereinrichtung
- 31: Toilettenbehälter
- 32: Schiebeklappe
- 33: Andruckfläche
- 34: Zugelement
- 35: Andruckelement
- 36: Reinigungsöffnung
- 37: Bohrung
- 38: Führungsstange
- 39: Führungsstange

## Patentansprüche

1. Entleer- und Reinigungsstation (20) für einen einschiebbaren Toilettenbehälter (31) mit einer Aufnahmekassette (1) und einer Aufnahmeöffnung, wobei die Entleer- und Reinigungsstation (20) zumindest ein Reinigungselement (21) aufweist, welches über eine Reinigungsöffnung (36) des Toilettenbehälters (31) einführbar und automatisch absenk- und anhebbar ist,
wobei die Aufnahmekassette (1) zur Aufnahme unterschiedlicher Toilettenbehältergrößen vorgesehen ist, wobei das Reinigungselement (21) mithilfe von Positioniermittel und einer Zentriereinrichtung (30) oberhalb der Reinigungsöffnung (36) positionierbar ist,
**dadurch gekennzeichnet, dass** die Zentriereinrichtung (30) über eine keilförmige Andruckfläche (33) eine Anpassung an die Höhe des Toilettenbehälters vornimmt und über eine Führung (35) eine seitliche Positionierung des Reinigungselementes (21) gegenüber der Reinigungsöffnung (36) erfolgt, um den Verschluss (32) des Toilettenbehälters (31) gleichzeitig über einen Schieber in eine geöffnete Position zu verschieben.

2. Entleer- und Reinigungsstation (20) nach Anspruch 1,
**dadurch gekennzeichnet,**
**dass** die Aufnahmekassette (1) mit Positionierungsmitteln ausgestattet ist, welche aus optischen, mechanischen und/oder elektromechanischen Elementen bestehen.

3. Entleer- und Reinigungsstation (20) nach Anspruch 2,
**dadurch gekennzeichnet,**
**dass** die mechanischen Elemente aus Führungsschienen und/oder Anschlagflächen (11, 12, 13, 14, 18) bestehen, und/oder dass die optischen Elemente aus Lichtschranken, Reflexionslichtschranken oder Näherungsschaltern bestehen, und/oder dass die elektromechanischen Elemente aus Kontaktschaltern bestehen.

4. Entleer- und Reinigungsstation (20) nach einem der Ansprüche 1 bis 3,
**dadurch gekennzeichnet,**
**dass** die Höhe und/oder Breite der Toilettenbehälter (31) abtastbar ist, und/oder dass die Tiefenposition der Toilettenbehälter (31) innerhalb der Aufnahmekassette (1) über Vertiefungen, Ausnehmungen, Erhöhungen oder Haken taktil erfassbar ist.

5. Entleer- und Reinigungsstation (20) nach einem der Ansprüche 1 bis 4,
**dadurch gekennzeichnet,**
**dass** die Aufnahmekassette (1) als Einschubkasten ausgebildet ist und eine Aufnahmeöffnung an der Frontseite und teilweise im Deckenbereich aufweist.

6. Entleer- und Reinigungsstation (20) nach einem der Ansprüche 1 bis 5,
**dadurch gekennzeichnet,**
**dass** das Reinigungselement (21) durch einen Antrieb eine horizontale und/oder vertikale Bewegung ausführt, und/oder dass das Reinigungselement (21) elastisch biegsam und/oder verformbar ausgestaltet ist, und/oder dass als Reinigungselement (21) ein Saug- und Spülrohr zum Einsatz kommt, wobei das Saug- und Spülrohr elastisch biegsam und/oder verformbar ausgestaltet ist.

7. Entleer- und Reinigungsstation (20) nach einem der Ansprüche 1 bis 6,
**dadurch gekennzeichnet,**
**dass** das Saug- und Spülrohr als doppelwandiges Rohr mit flexiblen Schlauchanschlüssen und Schraubverbindungen ausgestaltet ist, wobei die Absaugung des Toilettenbehälterinhalts und Zuführung einer Reinigungsflüssigkeit vorgesehen ist, und/oder dass die Absaugung der Flüssigkeit aus dem Toilettenbehälter (31) mit Hilfe einer Saugpumpe erfolgt.

8. Entleer- und Reinigungsstation (20) nach einem der Ansprüche 1 bis 7,
**dadurch gekennzeichnet,**
**dass** ein Innenrohr eine Öffnung zur Absaugung des Toilettenbehälterinhalts aufweist, und/oder dass ein Außenrohr als Spülrohr endseitig, soweit dieses in den Toilettenbehälter (31) hineinragt, eine spritzdüsenartige Perforation aufweist, und/oder dass über das Außenrohr und die Perforation der Zulauf von Frischwasser, Reinigungsflüssigkeit und/oder Desinfektionsmitteln in den Toilettenbehälter (31) erfolgt.

9. Entleer- und Reinigungsstation (20) nach einem der Ansprüche 6 oder 7, **dadurch gekennzeichnet,**
**dass** das Saug- und Spülrohr mithilfe einer Schwenk- und Hebemechanik in den Toilettenbehälter (31) einführbar ist, und/oder dass das Saug- und Spülrohr rotierend ausgebildet ist, und/oder dass das Saug- und Spülrohr mit einer Pendelmechanik ausgestaltet ist, über die das Saug- und Spülrohr innerhalb des Toilettenbehälters (31) bewegbar ist.

10. Entleer- und Reinigungsstation (20) nach einem der Ansprüche 1 bis 9,
**dadurch gekennzeichnet,**
**dass** die Aufnahmekassette mit einer Pendelmechanik ausgestaltet ist.

11. Verfahren zur Reinigung von Toilettenbehältern (31), wobei die automatische Einführung eines elastisch biegsam und/oder verformbaren Saug- und Spülrohrs als Reinigungselement in den Toilettenbehälter (31) erfolgt und durch einen Antrieb eine horizontale und/oder vertikale Bewegung des Saug- und Spülrohres ausgeführt wird und eine Spülung und Absaugung des Inhalts des Toilettenbehälters (31) erfolgt,
mit einer automatischen Erkennung der Größe des Toilettenbehälters (31), wobei das Reinigungselement durch Positioniermittel und eine Zentriereinrichtung (30) oberhalb der Reinigungsöffnung (36) positioniert wird, **dadurch gekennzeichnet, dass** die Zentriereinrichtung (30) über eine keilförmige Andruckfläche (33) eine Anpassung an die Höhe des Toilettenbehälters vornimmt und über eine Führung (35) eine seitliche Positionierung des Reinigungselementes (21) gegenüber der Reinigungsöffnung (36) erfolgt, um den Verschluss des Toilettenbehälters (31) gleichzeitig über einen Schieber (32) in eine geöffnete Position zu verschieben.

12. Verfahren nach Anspruch 11, **gekennzeichnet durch** eine optische und/oder taktile Erfassung der Größe des Toilettenbehälters (31).

13. Verfahren nach Anspruch 11 oder 12, **gekennzeichnet durch** eine rotierende Bewegung des Saug- und Spülrohrs im Toilettenbehälter (31), und/oder **gekennzeichnet durch** eine pendelnde Bewegung des Saug- und Spülrohrs im Toilettenbehälter (31).

## Claims

1. Draining and cleaning station (20) for an insertable toilet container (31) with a receiving case (1) and a receiving opening, wherein the draining and cleaning station (20) comprises at least one cleaning element (21) which is insertable via a cleaning opening (36) of the toilet container (31) and is automatically lowerable and liftable, wherein the receiving case (1) is provided for receiving various toilet container sizes, wherein the cleaning element (21) is positionable above the cleaning opening (36) with the aid of a positioning means and a centring means (30),
**characterized in**
**that** the centring means (30) causes an adaptation to the height of the toilet container via a wedge-shaped pressing face and that a lateral positioning of the cleaning element (21) with respect to the cleaning opening (36) is effected via a guide (35) to simultaneously shift the closure (32) of the toilet container (31) into an opened position via a slide.

2. Draining and cleaning station (20) according to claim 1,
**characterized in**
**that** the receiving case (1) is equipped with positioning means consisting of optical, mechanical and/or electromechanical elements.

3. Draining and cleaning station (20) according to claim 2,
**characterized in**
**that** the mechanical elements consist of guide rails and/or stop faces (11,12,13,14,18) and/or that the optical elements consist of light barriers, reflective light barriers or proximity switches, and/or that the electromechanical elements consist of contact switches.

4. Draining and cleaning station (20) according to one of claims 1 to 3,
**characterized in**
**that** the height and/or width of the toilet containers (31) is scannable, and/or that the depth position of the toilet containers (31) within the receiving case (1) is detectable in a tactile manner via indentations, recesses, elevations or hooks.

5. Draining and cleaning station (20) according to one of claims 1 to 4,
**characterized in**
**that** the receiving case (1) is embodied as a slide-in box and comprises a receiving opening at the front side and partially in the top region.

6. Draining and cleaning station (20) according to one of claims 1 to 5,
**characterized in**
**that** the cleaning element (21) performs a horizontal and/or vertical movement through a drive, and/or that the cleaning element (21) is embodied to be elastically bendable and/or deformable, and/or that a suction and flush pipe is employed as the cleaning element (21), the suction and flush pipe being embodied to be elastically bendable and/or deformable.

7. Draining and cleaning station (20) according to one of claims 1 to 6,
**characterized in**
**that** the suction and flush pipe is embodied as a double-wall pipe with flexible hose connections and threaded joints, wherein the suction of the toilet container contents and the supply of a cleaning agent are provided, and/or that the suction of the liquid from the toilet container (31) is effected by means of a suction pump.

8. Draining and cleaning station (20) according to one of claims 1 to 7,
**characterized in**
**that** an inner pipe comprises an opening for the suction of the toilet container contents, and/or that an outer pipe as the flush pipe comprises a spray nozzle-type perforation on the end-side to the extent to which the flush pipe projects into the toilet container (31), and/or that the supply of fresh water, cleaning liquid and/or disinfectants into the toilet container (31) is effected via the outer pipe and the perforation.

9. Draining and cleaning station (20) according to one of claims 6 or 7,
**characterized in**
**that** the suction and flush pipe is insertable into the toilet container (31) by means of a swivel and lift mechanism, and/or that the suction and flush pipe is embodied to be rotating, and/or that the suction and flush pipe is embodied with a pendulum mechanism via which the suction and flush pipe is movable within the toilet container (31).

10. Draining and cleaning station (20) according to one of claims 1 to 9,
**characterized in**
**that** the receiving case is embodied with a pendulum mechanism.

11. Method of cleaning toilet containers (31), wherein the automatic insertion of an elastically bendable and/or deformable suction and flush pipe as a cleaning element into the toilet container (31) is effected and a horizontal and/or vertical movement of the suction and flush pipe is performed through a drive, and flushing and sucking of the contents of the toilet container (31) is effected, with an automatic detection of the size of the toilet container (31), wherein the cleaning element is positioned above the cleaning opening (36) by positioning means and a centring means (30),
**characterized in**
**that** the centring means (30) causes an adaptation to the height of the toilet container via a wedge-shaped pressing face (33) and a lateral positioning of the cleaning element (21) with respect to the cleaning opening (36) is effected via a guide (35) to simultaneously shift the closure of the toilet container (31) into an opened position via a slide (32).

12. Method according to claim 11,
**characterized by** an optical and/or tactile detection of the size of the toilet container (31).

13. Method according to claim 11 or 12,
**characterized by** a rotating movement of the suction and flush pipe in the toilet container (31), and/or **characterized by** an oscillating movement of the suction and flush pipe in the toilet container (31).

## Revendications

1. Station de vidange et de nettoyage (20) pour un réservoir de toilette insérable (31), dotée d'un caisson de réception (1) et d'une ouverture de réception, dans laquelle la station de vidange et de nettoyage (20) comporte au moins un élément nettoyant (21), lequel peut être introduit par le biais d'une ouverture de nettoyage (36) du réservoir de toilette (31) et peut être automatiquement abaissé et relevé, dans laquelle le caisson de réception (1) est prévu pour recevoir différentes tailles de réservoir de toilette, dans laquelle l'élément nettoyant (21) peut être positionné au-dessus de l'ouverture de nettoyage (36) à l'aide de moyen de positionnement et d'un dispositif de centrage (30),
**caractérisée en**
**ce que** le dispositif de centrage (30) effectue une adaptation à la hauteur du réservoir de toilette par le biais d'une surface d'appui conique (33) et un positionnement latéral de l'élément nettoyant (21) par rapport à l'ouverture de nettoyage (36) s'effectue par le biais d'un guidage (35), afin de faire simultanément coulisser la fermeture (32) du réservoir de toilette (31) dans une position ouverte par le biais d'une glissière.

2. Station de vidange et de nettoyage (20) selon la revendication 1,
**caractérisée en**
**ce que** le caisson de réception (1) est configuré avec des moyens de positionnement, lesquels sont constitués d'éléments optiques, mécaniques et/ou électromécaniques.

3. Station de vidange et de nettoyage (20) selon la revendication 2,
**caractérisée en**
**ce que** les éléments mécaniques sont constitués de rails de guidage et/ou de surfaces de butée (11, 12, 13, 14, 18), et/ou **en ce que** les éléments optiques sont constitués de barrières lumineuses, de barrières lumineuses à réflexion ou de détecteurs de proximité, et/ou **en ce que** les éléments électromécaniques sont constitués d'interrupteurs à contact.

4. Station de vidange et de nettoyage (20) selon l'une des revendications 1 à 3,
**caractérisée en**
**ce que** la hauteur et/ou la largeur du réservoir de toilette (31) peut être palpée, et/ou **en ce que** la position en profondeur du réservoir de toilette (31) à l'intérieur du caisson de réception (1) peut être saisie de manière tactile par le biais de dépressions, d'évidements, d'élévations ou de crochets.

5. Station de vidange et de nettoyage (20) selon l'une des revendications 1 à 4,
**caractérisée en**
**ce que** le caisson de réception (1) est réalisé comme bac insérable et comporte une ouverture de réception sur la face avant et partiellement dans la zone de capot.

6. Station de vidange et de nettoyage (20) selon l'une des revendications 1 à 5,
**caractérisée en**
**ce que** l'élément nettoyant (21) réalise par un entraînement un mouvement horizontal et/ou vertical, et/ou **en ce que** l'élément nettoyant (21) est réalisé de manière élastiquement flexible et/ou déformable, et/ou **en ce qu'**un tube d'aspiration et de lavage est utilisé comme élément nettoyant (21), dans laquelle le tube d'aspiration et de lavage est configuré de manière élastiquement flexible et/ou déformable.

7. Station de vidange et de nettoyage (20) selon l'une des revendications 1 à 6,
**caractérisée en**
**ce que** le tube d'aspiration et de lavage est configuré comme tube à double paroi doté de raccords de tuyau et de branchements de tuyaux flexibles, dans laquelle l'aspiration du contenu du réservoir de toilette et l'apport d'un liquide de nettoyage sont prévus, et/ou **en ce que** l'aspiration du liquide hors du réservoir de toilette (31) s'effectue à l'aide d'une pompe d'aspiration.

8. Station de vidange et de nettoyage (20) selon l'une des revendications 1 à 7,
**caractérisée en**
**ce qu'**un tube intérieur comporte une ouverture pour l'aspiration du contenu du réservoir de toilette, et/ou **en ce qu'**un tube extérieur comporte d'un côté en tant que tube de lavage, tant que celui-ci s'engage dans le réservoir de toilette (31), une perforation faisant buse de pulvérisation, et/ou **en ce que** l'arrivée d'eau claire, de liquide de nettoyage et/ou de désinfectant dans le réservoir de toilette (31).

9. Station de vidange et de nettoyage (20) selon l'une des revendications 6 ou 7,
**caractérisée en**
**ce que** le tube d'aspiration et de lavage peut être introduit dans le réservoir de toilette (31) à l'aide d'un mécanisme de pivot et de relevage, et/ou **en ce que** le tube d'aspiration et de lavage est réalisé de manière rotative, et/ou **en ce que** le tube d'aspiration et de lavage est configuré avec un mécanisme d'oscillation, par le biais duquel le tube d'aspiration et de lavage est mobile à l'intérieur du réservoir de toilette (31).

10. Station de vidange et de nettoyage (20) selon l'une des revendications 1 à 9,
**caractérisée en**
**ce que** le caisson de réception est configuré avec un mécanisme d'oscillation.

11. Procédé de nettoyage de réservoirs de toilette (31), dans lequel l'introduction automatique d'un tube d'aspiration et de lavage élastiquement flexible et/ou déformable dans le réservoir de toilette (31) en tant qu'élément nettoyant est effectuée et un mouvement horizontal et/ou vertical du tube d'aspiration et de lavage est réalisé par un entraînement et un lavage et une aspiration du contenu du réservoir de toilette (31) est effectuée, avec une reconnaissance automatique de la taille du réservoir de toilette (31), dans lequel l'élément nettoyant est positionné au-dessus de l'ouverture de nettoyage (36) à l'aide de moyens de positionnement et d'un dispositif de centrage (30),
**caractérisé en**
**ce que** le dispositif de centrage (30) effectue une adaptation à la hauteur du réservoir de toilette par le biais d'une surface d'appui conique (33) et un positionnement latéral de l'élément nettoyant (21) par rapport à l'ouverture de nettoyage (36) s'effectue par le biais d'un guidage (35), afin de faire simultanément coulisser la fermeture du réservoir de toilette (31) dans une position ouverte par le biais d'une glissière.

12. Procédé selon la revendication 11,
**caractérisé par** une saisie optique et/ou tactile de la taille du réservoir de toilette (31).

13. Procédé selon la revendication 11 ou 12,
**caractérisé par** un mouvement rotatif du tube d'aspiration et de lavage dans le réservoir de toilette (31), et/ou **caractérisé par** un mouvement oscillant du tube d'aspiration et de lavage dans le réservoir de toilette (31).
